# EUROPÄISCHE PATENTSCHRIFT

(11) **EP 3 031 623 B1**
(45) Veröffentlichungstag und Bekanntmachung des Hinweises auf die Patenterteilung: **12.07.2017**
(21) Anmeldenummer: 15197711.3
(22) Anmeldetag: 03.12.2015
(51) Int. Cl.: B60C 9/20, B60C 9/00, D02G 3/48

(54) **HYBRIDKORD ZUR VERWENDUNG ALS FESTIGKEITSTRÄGER IN EINER GÜRTELBANDAGE EINES FAHRZEUGLUFTREIFENS**
HYBRID CORD FOR USE AS A SUPPORT IN A BELT OF A PNEUMATIC VEHICLE TYRE
CORDE HYBRIDE EN TANT QUE SUPPORT DE FIXATION DANS UN BANDAGE D'UN PNEU DE VEHICULE AUTOMOBILE

(30) Priorität: 12.12.2014 DE 102014225679
(43) Veröffentlichungstag der Anmeldung: 15.06.2016
(73) Patentinhaber: Continental Reifen Deutschland GmbH, 30165 Hannover (DE)
(72) Erfinder: Reese, Wolfgang, 31228 Peine (DE); Ludwig, Reinhard, 31848 Bad Münder (DE)
(74) Vertreter: Finger, Karsten

(56) Entgegenhaltungen:
- EP-A1- 2 781 371
- EP-A1- 3 006 228
- WO-A1-2016/023656
- US-A1- 2013 146 199

## Beschreibung

Die Erfindung betrifft einen Hybridkord zur Verwendung als Festigkeitsträger in einer Gürtelbandage eines Fahrzeugluftreifens aus einem hochmoduligen Garn mit einer bestimmten Garnfeinheit und einem niedermoduligen Garn, wobei das niedermodulige Garn eine geringere Garnfeinheit als das hochmodulige Garn aufweist und wobei die zwei Garne miteinander endverdreht sind. Die Erfindung betrifft ferner einen Fahrzeugluftreifen, welcher eine Gürtelbandage mit einem derartigen Hybridkord als Festigkeitsträger aufweist.

Ein derartiger Hybridkord ist aus der WO 97/06297 bekannt. Das hochmodulige Garn ist ein Aramid-Garn, während das niedermodulige Garn ein Polyamid-Garn ist. Der Hybridkord ist derart konstruiert, dass eine bestimmte konstruktive Dehnung des Aramidgarnes, welches rein vom Material her eine geringe Dehnfähigkeit aufweist, ermöglicht ist. Festigkeitsträger für Fahrzeugluftreifen mit Hybridkorde sind ferner aus der nachveröffentlichten Druckschrift EP 3 006 228 A1 und der Druckschrift EP 2 781 371 A1 bekannt, die den Oberbegriff des Anspruchs 1 zeigt. Mit dem Begriff "hochmoduliges Garn" ist ein Garn gemeint, welches aus einem hochmoduligen Material besteht. Mit dem Begriff "niedermoduliges Garn" ist ein Garn gemeint, welches aus einem niedermoduligen Material besteht. Dabei werden das niedermodulige Garn und das hochmodulige Garn anhand der in der nachfolgenden Tabelle 1 beschriebenen Werte in (mN/tex) definiert. Es ist die Kraft bestimmt, die jeweils auf ein Garn bei 1% Dehnung und bei 2% Dehnung aufgebracht werden muss, normiert auf die Garnfeinheit in tex. Ermittelt wird nach ASTM D885.

**Tabelle 1**

| Garn / Dehnung | 1% | 2% |
|---|---|---|
| Niedermodulig | < 150 mN/tex | < 200 mN/tex |
| Hochmodulig | > 300 mN/tex | > 500 mN/tex |

Um bei Fahrzeugluftreifen, insbesondere beim Hochgeschwindigkeitseinsatz, eine Erhebung des Reifens durch die im Fahrbetrieb auftretenden Fliehkräfte zu verhindern, ist es bekannt, bei einem Fahrzeugluftreifen, der im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort durch Umschlingen zugfester Wulstkerne verankert ist, einen radial außen befindlichen, Profilrillen aufweisenden Gummilaufstreifen und einen Gürtel zwischen dem Gummilaufstreifen und der Karkasse aufweist, eine Gürtelbandage vorzusehen. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger in Form von Korden, die in Gummi eingebettet sind.

Die Bandage wird bei der Reifenherstellung in Form von Lagen mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit einer Kautschukmischung durchläuft. Bei der Bombage und Vulkanisation des Reifens erhebt/dehnt sich der Reifen in der Regel im Schulterbereich bis 2 % und im Mittenbereich bis 4 % im Vergleich zum unvulkanisierten Rohling, wenn der Rohling auf einer flachen Trommel gewickelt wird.

Die Festigkeitsträger der Bandage sollen bei der Reifenherstellung eine ausreichende Erhebung bei der Bombage und in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit gewährleisten.

Als Festigkeitsträger für die Bandage sind bereits unterschiedlichste Korde vorgeschlagen worden. So ist beispielsweise aus der DE 10 2006 031 780 A1 für die Festigkeitsträgerkorde in der Gürtelbandage ein Hybridkord offenbart, der aus einem erstverdrehten Garn aus Aramid einer Feinheit von 1100 dtex und einem erstverdrehten Garn aus Polyamid 6.6 einer Feinheit von 940 dtex, welche miteinander endverdreht sind, gebildet ist. Ein solcher Hybridkord weist ein spezielles Kraft-Dehnungs-Verhalten auf. Der Kord weist in einem Zugkraft-Dehnungs-Diagramm bei geringer Dehnung zunächst eine geringe Steigung der Kurve auf; bei höherer Dehnung steigt dann die Kurve überproportional stark an. In diesem letzten Bereich ist eine geringe weitere Dehnung mit hohem Kraftaufwand verbunden. Dieses Kraft-Dehnungs-Verhalten ermöglicht eine Erhebung bei der Bombage und der Vulkanisation und macht den Reifen hochgeschwindigkeitstauglich. Es hat sich allerdings gezeigt, dass bei der Erhebung des Reifens beim Reifenbau derartige Korde Kräfte auf den Gürtel ausüben können, die zu einer Welligkeit des Gürtels führen und/oder durch eine Verstärkung des Gürtels kompensiert werden müssen.

Der Erfindung liegt die Aufgabe zugrunde, mit einfachen Mitteln einen Hybridkord für die Gürtelbandage eines Fahrzeugluftreifens bereitzustellen, welcher in der Herstellung kostengünstiger ist und welcher einen problemloseren Reifenbau sowie eine verbesserte Hochgeschwindigkeitstauglichkeit des diesen Hybridkord in der Gürtelbandage beinhaltenden Reifens aufweist.

Gelöst wird die gestellte Aufgabe erfindungsgemäß dadurch, dass das niedermodulige Garn eine Feinheit von höchstens 550 dtex aufweist und dass das hochmodulige Garn eine Feinheit von mindestens 1100 dtex aufweist.

Der erfindungsgemäße Hybridkord zeichnet sich durch eine starke Asymmetrie hinsichtlich der Garnfeinheiten des hochmoduligen Garnes zum niedermoduligen Garn auf, wobei das niedermodulige Garn eine Feinheit von höchstens 550 dtex aufweist. Diese Kombination aus Asymmetrie hinsichtlich der Garnfeinheiten im Hybridkord und geringer Feinheit des niedermoduligen Garns hat sich überraschenderweise als sehr geeignet für den Einsatz in der Gürtelbandage erwiesen. Der Hybridkord weist unter geringem Kraftaufwand die für die Erhebung notwendige Dehnungsfähigkeit und ab ca. 3% bis 4% Dehnung nur noch eine sehr geringe Dehnungsfähigkeit auf.

Anfänglich wirkt vorrangig das eine sehr geringe Garnfeinheit aufweisende niedermodulige Garn. Dieses ist besonders vorteilhaft für die Resterhebung des Rohreifens in der Heizform. Die Kräfte, die die Hybridkorde bei der Erhebung des Rohreifens auf den Gürtel ausüben, sind verringert. Ein problemloserer Reifenbau ist erwirkt und auf eine Verstärkung des Gürtels zur Vermeidung einer Welligkeit des Gürtels kann verzichtet werden.

Bei größeren Dehnungen wirkt hauptsächlich das hochmodulige Garn mit einer Feinheit von mindestens 1100 dtex. Aufgrund der geringen Garnfeinheit des niedermoduligen Garns werden die Dehnungseigenschaften des Hybridkordes bereits bei geringerer Dehnung von dem hochmoduligen Garn dominiert. Es hat sich gezeigt, dass ein solcher Hybridkord das Umfangswachstum bei hoher Geschwindigkeit noch geringer hält, wodurch die Hochgeschwindigkeitstauglichkeit verbessert ist. Der Hybridkord ist noch besser an die gestellten Anforderungen - Zulassen der Resterhebung und geringes Umfangswachstum bei hoher Geschwindigkeit - angepasst.

Zudem ist der Hybridkord durch die geringe Feinheit des niedermoduligen Garns kostengünstiger in seiner Herstellung.

Als besonders vorteilhaft für einen problemlosen Reifenbau hat es sich herausgestellt, wenn das niedermodulige Garn eine Feinheit von 200 dtex bis 550 dtex, bevorzugt von 350 dtex bis 470 dtex, aufweist. Hierdurch ergibt sich ein erwünschter flacher Anfangsbereich der Kraft-/Dehnungskurve.

Besonders vorteilhafte Hochgeschwindigkeitseigenschaften ergeben sich, wenn das hochmodulige Garn eine Feinheit von 1100 dtex bis 2200 dtex, bevorzugt eine Feinheit von 1100 dtex bis 1680 dtex, aufweist.

Vorteilhaft ist es, wenn der Anteil des hochmoduligen Garnes im Hybridkord 15 Gew.% (Gewichts-%) bis 65 Gew.%, bevorzugt 20 Gew.% bis 40 Gew.%, besonders bevorzugt 25 Gew.% bis 35 Gew.%, ist.

Vorteilhafterweise besteht das hochmodulige Garn aus einem der nachfolgend genannten Materialien: Carbonfaser, Glasfaser, Basalt, aromatisches Polyamid, bevorzugt aus einem aromatischen Polyamid. Beim aromatischen Polyamid kann es sich um para-Aramid oder meta-Aramid handeln.

Vorteilhafterweise besteht das niedermodulige Garn aus einem Polyamid oder aus einem Polyester. Bei den Polyamiden (PA) kann es sich um die Polyamide PA 4.6, PA 6, PA 6.6, PA 10.10, PA 11 und/oder PA12, bevorzugt um PA 6.6 (PA 6.6) oder PA 10.10, handeln. Bei den Polyestern kann es sich um die Polyester Polyethylennaphthalat (PEN), Polyethylenfuranoat (PEF), Polybutylenterephthalat (PBT), Polybutylennaphttalat (PBN), Polypropylenterephthalat (PPT), Polypropylennaphthalat (PPN), Polyethylenterephthalat (PET), High-Modulus Low-Shrinkage-PET (HMLS-PET), insbesondere um thermoplastische Polyester und/oder vernetzte ungesättigte Polyester handeln. Bevorzugt handelt es sich um ein PET.

In einer bevorzugten Ausführungsform beträgt der Twist-Faktor α der Endverdrehung 150 bis 250, bevorzugt 190 bis 210. Der Twist-Faktor α ist dabei definiert als α = Verdrehungszahl [T/m] · (Feinheit [tex]/ 1000)^{1/2}. Die Verdrehungszahl ist in Umdrehungen pro Meter (Turns per meter) angegeben. Die Feinheit bezeichnet die Summe der Garnfeinheiten des Hybridkordes. Ein Hybridfestigkeitsträger mit einem solchen Twist-Faktor zeichnet sich durch ein Kraft-Dehnungs-Verhalten aus, das bei Verwendung der Festigkeitsträgerlage, insbesondere als Gürtelbandage in Fahrzeugluftreifen, einen problemlosen Reifenbau samt Vulkanisation ermöglicht und dem Reifen eine große Hochgeschwindigkeitstauglichkeit verleiht.

Vorteilhaft ist es, wenn beide Garne die gleiche Twistrichtung aufweisen und wenn der Kord die dazu entgegengesetzte Twistrichtung aufweist. Entweder sind also beide Garne in S-Richtung vorverdreht und miteinander in Z-Richtung zum Kord endverdreht oder es sind beide Garne in Z-Richtung vorverdreht und miteinander in S-Richtung zum Kord endverdreht.

In einer anderen Ausführung der Erfindung weist der Hybridkord die Konstruktion Aramid 1680 x 1 + PA 6.6 470 x 1 oder die Konstruktion Carbonfaser 1600 x 1 + PA 6.6 470 x 1 auf. Es ist ein verdrehtes Aramid-Garn bzw. Carbonfaser-Garn mit einer Feinheit von 1680 dtex bzw. von 1600 dtex mit einem PA 6.6-Garn der Feinheit von 470 dtex miteinander endverdreht.

In einer wiederum anderen Ausführung der Erfindung weist der Hybridkord die Konstruktion Aramid 1680 x 1 + PA 6.6 235 x 1 oder die Konstruktion Carbonfaser 1600 x 1 + PA 6.6 235 x 1 auf. Es ist ein verdrehtes Aramid-Garn bzw. Carbonfaser-Garn mit einer Feinheit von 1680 dtex bzw. von 1600 dtex mit einem PA 6.6-Garn der Feinheit von 235 dtex miteinander endverdreht.

Die Erfindung betrifft ebenfalls einen Fahrzeugluftreifen in Radialbauart mit einem mehrlagigen Gürtel und einer den Gürtel radial außen abdeckenden Gürtelbandage, welche als Festigkeitsträger einen Hybridkord gemäß einer oder mehreren der vorgenannten Ausführungen aufweist.

Ein bevorzugtes Ausführungsbeispiel ist ein Hybridkord aus einem Aramid-Garn mit einer Garnfeinheit von 1680 dtex und aus einem PA 6.6-Garn mit einer Garnfeinheit von 470 dtex. Das Aramid-Garn weist eine Erstverdrehung mit einer Verdrehungszahl von 370 T/m, entweder in Z-Richtung oder in S-Richtung, auf. Das PA 6.6-Garn weist ebenfalls eine Erstverdrehung mit einer Verdrehungszahl von 370 T/m mit gleicher Verdrehungsrichtung auf.

Das Aramid-Garn und das PA 6.6-Garn werden zu einem Hybridkord endverdreht, dessen Verdrehungsrichtung die entgegengesetzte Verdrehungsrichtung der einzelnen Garne ist. So wird beispielsweise bei einer Verdrehungsrichtung Z der Garne der Kord in S-Richtung gedreht. Die Verdrehungszahl des Kordes beträgt 370 T/m, was bei einer Kord-Feinheit von 2150 dtex einem Twist-Faktor von α = 172 entspricht.

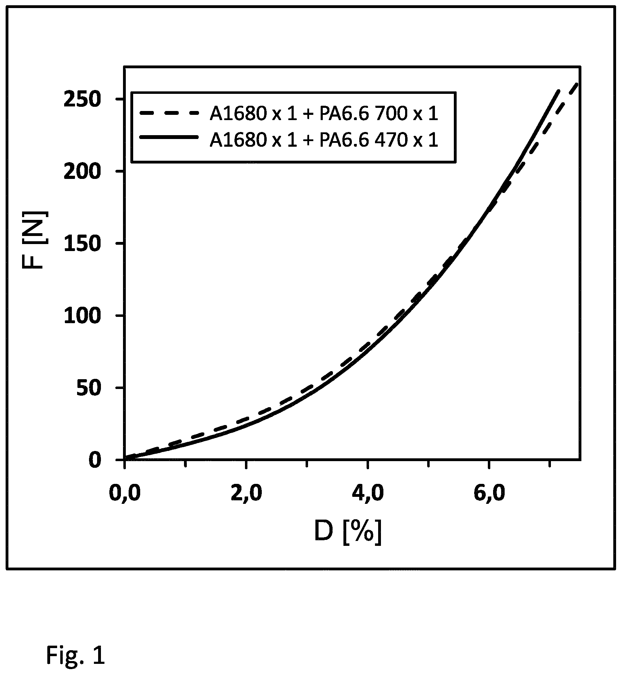

Die Fig.1 gibt Kraft-Dehnungskurven, ermittelt gemäß ASTM D885, eines gedippten erfindungsgemäßen Hybridkords sowie eines gedippten Vergleichs-Hybridkordes für den Einsatz in einer Gürtelbandage an. "Gedippt" bedeutet: Der Kord wurde in einer dem Fachmann bekannten Weise nach dem Twisten und bedarfsweise Weben mit einer Dip-Lösung imprägniert und damit gummifreundlich ausgerüstet und unter Temperatureinwirkung verstreckt. Die horizontale Achse zeigt die Dehnung D, die vertikale Achse die Kraft F an.

Es sind Kraft-Dehnungskurven von einem erfindungsgemäßen Hybridkord der Konstruktionen Aramid 1680x1 + PA 6.6 470x1 mit einer Verdrehungszahl von 370 T/m, entsprechend einem Twist-Faktor von α = 172 , sowie von einem Vergleichs-Hybridkord der Konstruktion Aramid 1680x1 + PA 6.6 700x1 mit einer Verdrehungszahl von 370 T/m, entsprechend einem Twist-Faktor von α = 181, dargestellt. Es ist ersichtlich, dass der erfindungsgemäße Kord einen flacheren, also vorteilhafteren Verlauf bis ca. 3% - 4% Dehnung aufweist als der Kord des Standes der Technik. Die Kraft, die für 1% Dehnung des Hybridkordes erforderlich ist, ist beim erfindungsgemäßen Hybridkord um ca. 24% geringer als beim Vergleichs-Hybridkord. Die Kraft F, die für 2% Dehnung des Hybridkordes erforderlich ist, ist beim erfindungsgemäßen Hybridkord um ca. 16% geringer als beim Vergleichs-Hybridkord. Zudem ist der erfindungsgemäße Hybridkord im weiteren Verlauf höhermodulig, die Kraft-Dehnungskurve steigt also steiler an als beim Kord des Standes der Technik, welches sich vorteilhaft auf die Hochgeschwindigkeitstauglichkeit des Reifens auswirkt.

## Patentansprüche

1. Hybridkord zur Verwendung als Festigkeitsträger in einer Gürtelbandage eines Fahrzeugluftreifens aus einem hochmoduligen Garn mit einer bestimmten Garnfeinheit und einem niedermoduligen Garn, wobei das niedermodulige Garn eine geringere Garnfeinheit als das hochmodulige Garn aufweist, wobei die zwei Garne miteinander endverdreht sind, wobei das niedermodulige Garn eine Feinheit von höchstens 550 dtex aufweist, wobei das hochmodulige Garn eine Feinheit von mindestens 1100 dtex aufweist und wobei das niedermodulige Garn aus einem Polyamid oder einem Polyester besteht
**dadurch gekennzeichnet, dass**
das hochmodulige Garn aus Carbonfaser, Glasfaser oder einem aromatischen Polyamid, bevorzugt aus einem aromatischen Polyamid, besteht und dass der Twist-Faktor α der Endverdrehung 150 bis 250, bevorzugt 190 bis 210, beträgt.

2. Hybridkord nach Anspruch 1, **dadurch gekennzeichnet, dass** das niedermodulige Garn eine Feinheit von 200 dtex bis 550 dtex, bevorzugt von 350 dtex bis 470 dtex, aufweist.

3. Hybridkord nach einem der vorangehenden Ansprüche, **dadurch gekennzeichnet, dass** das hochmodulige Garn eine Feinheit von 1100 dtex bis 2200 dtex, bevorzugt von 1100 dtex bis 1680 dtex, aufweist.

4. Hybridkord nach einem der vorangehenden Ansprüche, **dadurch gekennzeichnet, dass** der Anteil des hochmoduligen Garnes im Hybridkord 15 Gew.% bis 65 Gew.%, bevorzugt 20 Gew.% bis 40 Gew.%, besonders bevorzugt 25 Gew.% bis 35 Gew.%, ist.

5. Hybridkord nach einem oder mehreren der vorangehenden Ansprüche, **dadurch gekennzeichnet, dass** beide Garne die gleiche Twistrichtung aufweisen und dass der Kord die dazu entgegengesetzte Twistrichtung aufweist.

6. Hybridkord nach einem oder mehreren der vorangehenden Ansprüche, **dadurch gekennzeichnet, dass** dieser die Konstruktion Aramid 1680 x 1 + PA 6.6 470 x 1 oder die Konstruktion Carbonfaser 1600 x 1 + PA 6.6 470 x 1 aufweist.

7. Hybridkord nach einem oder mehreren der Ansprüche 1-5, 6, 7 **dadurch gekennzeichnet, dass** dieser die Konstruktion Aramid 1680 x 1 + PA 6.6 235 x 1 oder die Konstruktion Carbonfaser 1600 x 1 + PA 6.6 235 x 1 aufweist.

8. Fahrzeugluftreifen in Radialbauart mit einem mehrlagigen Gürtel und einer den Gürtel radial außen abdeckenden Gürtelbandage, welche als Festigkeitsträger einen Hybridkord gemäß einem oder mehreren der Ansprüche 1 bis 7 aufweist.

## Claims

1. Hybrid cord for use as strength member in a belt bandage of a pneumatic vehicle tyre, composed of a high-modulus yarn having a certain yarn fineness and a low-modulus yarn, wherein the low-modulus yarn has a lower yarn fineness than the high-modulus yarn, wherein the two yarns are cabled together, wherein the low-modulus yarn has a fineness of not more than 550 dtex, wherein the high-modulus yarn has a fineness of not less than 1100 dtex, and wherein the low-modulus yarn consists of a polyamide or of a polyester,
**characterized in that**
the high-modulus yarn consists of carbon fibre, glass fibre or an aromatic polyamide, preferably of an aromatic polyamide, and **in that** the twist factor α of the cabling is in the range from 150 to 250, preferably in the range from 190 to 210.

2. Hybrid cord according to Claim 1, **characterized in that** the low-modulus yarn has a fineness of 200 dtex to 550 dtex, preferably of 350 dtex to 470 dtex.

3. Hybrid cord according to either preceding claim, **characterized in that** the high-modulus yarn has a fineness of 1100 dtex to 2200 dtex, preferably of 1100 dtex to 1680 dtex.

4. Hybrid cord according to any preceding claim, **characterized in that** the proportion of high-modulus yarn in the hybrid cord is in the range from 15 wt% to 65 wt%, preferably in the range from 20 wt% to 40 wt% and more preferably in the range from 25 wt% to 35 wt%.

5. Hybrid cord according to one or more of the preceding claims, **characterized in that** the two yarns have the same twisting direction and **in that** the cord has the twisting direction opposite thereto.

6. Hybrid cord according to one or more of the preceding claims, **characterized in that** it has the construction: aramid 1680 x 1 + PA 6.6 470 x 1, or the construction: carbon fibre 1600 x 1 + PA 6.6 470 x 1.

7. Hybrid cord according to one or more of Claims 1-5, 6 and 7, **characterized in that** it has the construction: aramid 1680 x 1 + PA 6.6 235 x 1, or the construction: carbon fibre 1600 x 1 + PA 6.6 235 x 1.

8. Pneumatic vehicle tyre in a radial build with a multi-ply belt and a belt bandage covering the belt radially exteriorly and comprising a hybrid cord according to one or more of Claims 1 to 7 as strength member.

## Revendications

1. Câble hybride destiné à une utilisation en tant que renfort dans un bandage de ceinture d'un pneu de véhicule automobile, en un fil de module élevé ayant une finesse de fil déterminée et un fil de module faible, le fil de module faible présentant une finesse de fil plus faible que le fil de module élevé, les deux fils étant au final enroulés l'un avec l'autre, le fil de module faible présentant une finesse d'au plus 550 dtex, le fil de module élevé présentant une finesse d'au moins 1 100 dtex, et le fil de module faible étant constitué d'un polyamide ou d'un polyester,
**caractérisé en ce que** le fil de module élevé est constitué de fibres de carbone, de fibres de verre ou d'un polyamide aromatique, de préférence d'un polyamide aromatique, et **en ce que** le facteur de torsion α de l'enroulement final est de 150 à 250, de préférence de 190 à 210.

2. Câble hybride selon la revendication 1, **caractérisé en ce que** le fil de module faible présente une finesse de 200 dtex à 550 dtex, de préférence de 350 dtex à 470 dtex.

3. Câble hybride selon l'une quelconque des revendications précédentes, **caractérisé en ce que** le fil de module élevé présente une finesse de 1 100 dtex à 2 200 dtex, de préférence de 1 100 dtex à 1 680 dtex.

4. Câble hybride selon l'une quelconque des revendications précédentes, **caractérisé en ce que** la proportion du fil de module élevé dans le câble hybride est de 15 % en poids à 65 % en poids, de préférence de 20 % en poids à 40 % en poids, de manière particulièrement préférée de 25 % en poids à 35 % en poids.

5. Câble hybride selon une ou plusieurs des revendications précédentes, **caractérisé en ce que** les deux fils présentent la même direction d'enroulement et **en ce que** le câble présente la direction d'enroulement opposée.

6. Câble hybride selon une ou plusieurs des revendications précédentes, **caractérisé en ce que** celui-ci présente la construction aramide 1680 x 1 + PA 6.6 470 x 1 ou la construction fibres de carbone 1600 x 1 + PA 6.6 470 x 1.

7. Câble hybride selon une ou plusieurs des revendications 1 à 5, 6, 7, **caractérisé en ce que** celui-ci présente la construction aramide 1680 x 1 + PA 6.6 235 x 1 ou la construction fibres de carbone 1600 x 1 + PA 6.6 235 x 1.

8. Pneu pour véhicule automobile de construction radiale, comprenant une ceinture multicouche et un bandage de ceinture recouvrant radialement à l'extérieur la ceinture, qui comprend en tant que renfort un câble hybride selon une ou plusieurs des revendications 1 à 7.
